# EUROPEAN PATENT SPECIFICATION

(11) **EP 4 033 875 B1**
(45) Date of publication and mention of the grant of the patent: **08.11.2023**
(21) Application number: 20788951.0
(22) Date of filing: 24.09.2020
(51) Int. Cl.: A01B 69/00, A01B 79/00

(54) **SYSTEM AND METHOD FOR PROVIDING A VISUAL INDICATOR OF FIELD SURFACE PROFILE**
SYSTEM UND VERFAHREN ZUR BEREITSTELLUNG EINES VISUELLEN INDIKATORS FÜR DAS FELDOBERFLÄCHENPROFIL
SYSTÈME ET PROCÉDÉ POUR FOURNIR UN INDICATEUR VISUEL DE PROFIL DE SURFACE DE CHAMP

(30) Priority: 25.09.2019 US 201916582586
(43) Date of publication of application: 03.08.2022
(73) Proprietor: CNH Industrial Belgium NV, 8210 Zedelgem (BE)
(72) Inventor: DASIKA, Surya, Saket, New Holland, Pennsylvania 17557 (US)
(74) Representative: CNH Industrial IP Department
(86) International application number: PCT/US2020/052421
(87) International publication number: WO 2021/061934

(56) References cited:
- EP-A1- 3 357 316
- DE-A1-102016 219 470
- US-A1- 2019 128 690
- US-A1- 2019 392 239

## Description

### FIELD OF THE INVENTION

The present disclosure generally relates to systems and methods for providing a visual indicator of the surface profile of a field and, more particularly, to systems and methods for providing a visual indicator of the surface profile of a field in association with displayed image data of the field during the performance of an agricultural operation.

### BACKGROUND OF THE INVENTION

Agricultural implements, such as planters, seeders, tillage implements, and/or the like, are typically configured to perform an agricultural operation within a field, such as a planting/seeding operation, a tillage operation, and/or the like. When performing such agricultural operations, it is desirable to be able to adjust the operation of the implement to account for variations in the surface profile of the field that could potentially impact the effectiveness and/or efficiency of the operation. In this regard, systems have been developed that allow the surface profile of the field to be determined as the implement is traveling across the field. Adjustments to the operation of the implement may then be made based on the determined soil profile. These systems typically include cameras that capture images of the field. The images are then automatically analyzed using image processing techniques to assess the surface profile of the portion of the field present within the captured images. Such a system is disclosed in US 2019/128690 were embodiments generate and utilize three-dimensional terrain maps for vehicular control.

EP3.357.316 discloses a method for automatically monitoring soil surface roughness as a ground-engaging operation which is performed within a field and which may include receiving pre-operation surface roughness data associated with a given portion of the field and receiving post-operation surface roughness data associated with the given portion of the field. This pre- and post- operation surface roughness data is then analyzed to determine the surface roughness differential associated with the performance of the ground-engaging operation.! Depending on the analysis, the operation of an implement way be adjusted.

US 2019/392239 describes a system for illuminating a field of view of a vision-based sensor mounted on an agricultural machine. The system may also include a light source configured to emit supplemental light to illuminate at least a portion of the field of view of the vision-based sensor and a controller to control an operation of the light source based on an input indicative of ambient light present within the field of view of the vision-based sensor.

DE 10 2016 219470 on the other hand discloses a control assembly for controlling a lifting device for an attachment of a tractor. A sensor system is provided for sensing waviness of the ground on an adopted course of the tractor. The sensor system senses the position of the tractor and an algorithm produces map data on the basis of the sensed waviness of the ground and on the basis of the sensed position of tractor.

However, such image processing often requires significant processing power.

Accordingly, an improved system and method for providing a visual indicator of the surface profile of a field would be welcomed in the technology.

### SUMMARY OF THE INVENTION

Aspects and advantages of the technology will be set forth in part in the following description, or may be obvious from the description, or may be learned through practice of the technology.

The present invention provides a system according to claim 1 for providing a visual indication of field surface profile as an agricultural implement is moved across a field by a work vehicle. Furthermore, the present invention provides a method according to claim 12 for providing a visual indication of field surface profile as an agricultural implement is moved across a field by a work vehicle. Aspects of the invention are defined in the appended claims.

In one aspect, the present subject matter is directed to a system for providing a visual indication of field surface profile as an agricultural implement is moved across a field by a work vehicle. The system includes a user interface and an imaging device provided in operative association with one of the work vehicle or the agricultural implement such that the imaging device has a field of view directed to a portion of the field. Furthermore, the system includes a profile sensor provided in operative association with one of the work vehicle or the implement such that the profile sensor is configured to capture profile data indicative of a surface profile of the portion of the field present within the field of view of the imaging device.

Additionally, the system includes a controller communicatively coupled to the user interface, the imaging device, and the profile sensor. As such, the is configured to receive, from the imaging device, image data associated with an imaged portion of the field. Moreover, the controller is configured to determine the surface profile of the imaged portion of the field based on the profile data. In addition, the controller is configured to control the user interface to display a visual indicator in association with the image data, with the visual indicator providing a visual reference indicative of the determined surface profile of the imaged portion of the field.

In another aspect, the present subject matter is directed to a method for providing a visual indication of field surface profile as an agricultural implement is moved across a field by a work vehicle. The method includes receiving, with one or more computing devices, image data associated with an imaged portion of the field. Furthermore, the method includes receiving, with the one or more computing devices, profile data indicative of a surface profile of the imaged portion of the field. Moreover, the method includes determining, with the one or more computing devices, the surface profile of the imaged portion of the field based on the received profile data. Additionally, the method includes controlling, with the one or more computing devices, a user interface to display a visual indicator in association with the image data, with the visual indicator providing a visual reference indicative of the determined surface profile of the imaged portion of the field.

These and other features, aspects and advantages of the present technology will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present technology, including the best mode thereof, directed to one of ordinary skill in the art, is set forth in the specification, which makes reference to the appended figures, in which:
FIG. 1 illustrates a perspective view of one embodiment of a work vehicle towing an agricultural implement in accordance with aspects of the present subject matter;
FIG. 2 illustrates a perspective view of the implement shown in FIG. 1;
FIG. 3 illustrates a side view of one embodiment of an imaging device and a profile sensor of a work vehicle or an agricultural implement in accordance with aspects of the present subject matter;
FIG. 4 illustrates a schematic view of one embodiment of a system for providing a visual indication of field surface profile in accordance with aspects of the present subject matter;
FIG. 5 illustrates one embodiment of a user interface displaying a visual indicator in association with image data in accordance with aspects of the present subject matter, particularly illustrating the visual indicator superimposed onto the image data;
FIG. 6 illustrates another embodiment of a user interface displaying a visual indicator in association with image data in accordance with aspects of the present subject matter, particularly illustrating the visual indicator positioned adjacent to the image data; and
FIG. 7 illustrates a flow diagram of one embodiment of a method for providing a visual indication of field surface profile as in accordance with aspects of the present subject matter.

Repeat use of reference characters in the present specification and drawings is intended to represent the same or analogous features or elements of the present technology.

### DETAILED DESCRIPTION OF THE DRAWINGS

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention which is defined by the claims. For instance, features illustrated or described as part of one embodiment can be used with another embodiment to yield a still further embodiment. Thus, it is intended that the present invention covers such modifications and variations as come within the scope of the appended claims.

In general, the present subject matter is directed to systems and methods for providing a visual indication of the surface profile or of a field to an operator as an agricultural implement is moved across a field by a work vehicle. Specifically, in several embodiments, a controller of the disclosed system may be configured to receive image data associated with an imaged portion of the field from an imaging device (e.g., a camera) provided in operative association with the implement or the vehicle. Furthermore, the controller may be configured to receive profile data associated with the imaged portion of the field from a profile sensor (e.g., a LIDAR sensor). Thereafter, the controller may be configured to determine the surface profile of the imaged portion of the field based on the received profile data.

In accordance with aspects of the present subject matter, the controller may be configured to control the operation of a user interface to display a visual indicator in association with the received image data. Specifically, the visual indicator may generally be an object, such as a line or number, that provides a visual reference indicative of the determined surface profile of the imaged portion of the field. For example, in one embodiment, the controller may be configured to layer the visual indicator (e.g., a line showing the surface profile of the imaged portion of the field) onto the received image data to form layered image data. In such embodiment, the controller may then transmit the layered image data to the user interface such that the visual indicator is superimposed over the image data being displayed on the user interface. Alternatively, the visual indicator may be displayed on the user interface adjacent to the image data. Thereafter, the operator may determine from the combination of the displayed image data and the visual indicator whether the surface profile of the field is acceptable. In instances when the surface profile is unacceptable, the operator may provide an input to the controller (e.g., via the user interface) associated with adjusting one or more operating parameters of the implement and/or vehicle.

Thus, the disclosed systems and methods enable an operator to efficiently and more accurately assess field surface conditions, which improves control of the work vehicle and/or implement to obtain desired field surface conditions within a field and, as a result, leads to superior agricultural outcomes. Additionally, by determining the surface profile based on the profile data and not the image data, the disclosed systems and methods require less processing power and memory.

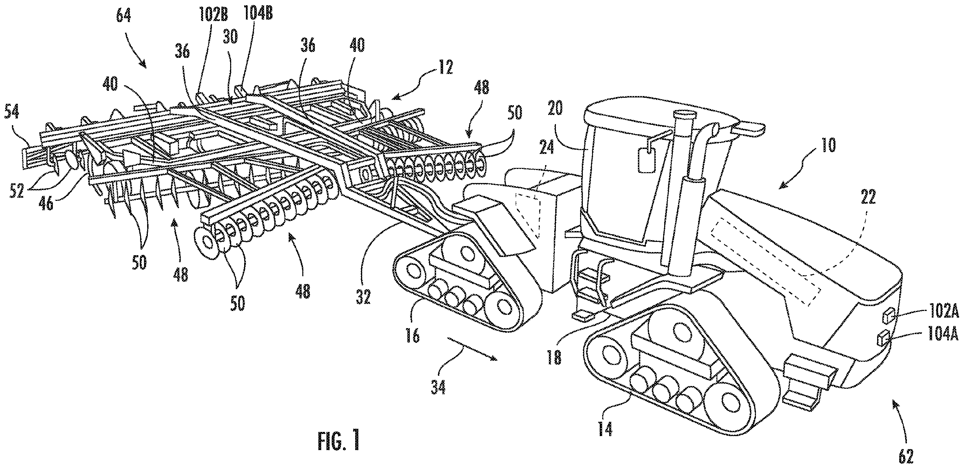

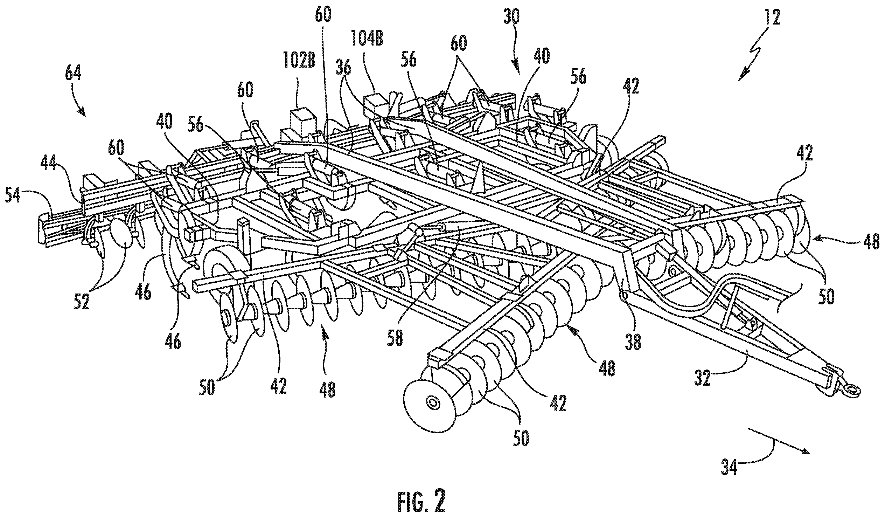

Referring now to drawings, FIGS. 1 and 2 illustrate perspective views of one embodiment of a work vehicle 10 and an associated agricultural implement 12 in accordance with aspects of the present subject matter. Specifically, FIG. 1 illustrates a perspective view of the work vehicle 10 towing the implement 12 (e.g., across a field). Additionally, FIG. 2 illustrates a perspective view of the implement 12 shown in FIG. 1. As shown in the illustrated embodiment, the work vehicle 10 is configured as an agricultural tractor and the implement 12 is configured as a tillage implement. However, in other embodiments, the work vehicle 10 may be configured as any other suitable agricultural vehicle. Furthermore, in alternative embodiments, the implement 12 may be configured as any other suitable agricultural implement.

As particularly shown in FIG. 1, the work vehicle 10 includes a pair of front track assemblies 14 (one is shown), a pair or rear track assemblies 16 (one is shown), and a frame or chassis 18 coupled to and supported by the track assemblies 14, 16. An operator's cab 20 may be supported by a portion of the chassis 18 and may house various input devices for permitting an operator to control the operation of one or more components of the work vehicle 10 and/or one or more components of the implement 12. Additionally, the work vehicle 10 may include an engine 22 and a transmission 24 mounted on the chassis 18. The transmission 24 may be operably coupled to the engine 22 and may provide variably adjusted gear ratios for transferring engine power to the track assemblies 14, 16 via a drive axle assembly (not shown) (or via axles if multiple drive axles are employed).

Moreover, as shown in FIGS. 1 and 2, the implement 12 may generally include a carriage frame assembly 30 configured to be towed by the work vehicle 10 via a pull hitch or tow bar 32 in a travel direction of the vehicle (e.g., as indicated by arrow 34). In general, the carriage frame assembly 30 may be configured to support a plurality of ground-engaging tools, such as a plurality of shanks, disk blades, leveling blades, basket assemblies, and/or the like. In several embodiments, the various ground-engaging tools may be configured to perform a tillage operation across the field along which the implement 12 is being towed.

As particularly shown in FIG. 2, the carriage frame assembly 30 may include aft-extending carrier frame members 36 coupled to the tow bar 32. In addition, reinforcing gusset plates 38 may be used to strengthen the connection between the tow bar 32 and the carrier frame members 36. In several embodiments, the carriage frame assembly 30 may generally function to support a central frame 40, a forward frame 42 positioned forward of the central frame 40 in the direction of travel 34 of the work vehicle 10, and an aft frame 44 positioned aft of the central frame 40 in the direction of travel 34 of the work vehicle 10. As shown in FIG. 2, in one embodiment, the central frame 40 may correspond to a shank frame configured to support a plurality of ground-engaging shanks 46. In such an embodiment, the shanks 46 may be configured to till the soil as the implement 12 is towed across the field. However, in other embodiments, the central frame 40 may be configured to support any other suitable ground-engaging tools.

Additionally, as shown in FIG. 2, in one embodiment, the forward frame 42 may correspond to a disk frame configured to support various gangs or sets 48 of disk blades 50. In such an embodiment, each disk blade 50 may, for example, include both a concave side (not shown) and a convex side (not shown). In addition, the various gangs 48 of disk blades 50 may be oriented at an angle relative to the travel direction 34 of the work vehicle 10 to promote more effective tilling of the soil. However, in other embodiments, the forward frame 42 may be configured to support any other suitable ground-engaging tools.

Moreover, similar to the central and forward frames 40, 42, the aft frame 44 may also be configured to support a plurality of ground-engaging tools. For instance, in the illustrated embodiment, the aft frame 44 is configured to support a plurality of leveling blades 52 and rolling (or crumbler) basket assemblies 54. However, in other embodiments, any other suitable ground-engaging tools may be coupled to and supported by the aft frame 44, such as a plurality closing disks.

In addition, the implement 12 may also include any number of suitable actuators (e.g., hydraulic cylinders) for adjusting the relative positioning, penetration depth, and/or down force associated with the various ground-engaging tools 46, 50, 52, 54. For instance, the implement 12 may include one or more first actuators 56 coupled to the central frame 40 for raising or lowering the central frame 40 relative to the ground, thereby allowing the penetration depth of and/or the force being applied to the shanks 46 to be adjusted. Similarly, the implement 12 may include one or more second actuators 58 coupled to the forward frame 42 to adjust the penetration depth and/or the down pressure of the disk blades 50. Moreover, the implement 12 may include one or more third actuators 60 coupled to the aft frame 44 to allow the aft frame 44 to be moved relative to the central frame 40, thereby allowing the relevant operating parameters of the ground-engaging tools 52, 54 supported by the aft frame 44 (e.g., the down pressure and/or the penetration depth) to be adjusted.

It should be appreciated that the configuration of the work vehicle 10 described above and shown in FIG. 1 is provided only to place the present subject matter in an exemplary field of use. Thus, it should be appreciated that the present subject matter may be readily adaptable to any manner of work vehicle configuration. For example, in an alternative embodiment, a separate frame or chassis may be provided to which the engine, transmission, and drive axle assembly are coupled, a configuration common in smaller tractors. Still other configurations may use an articulated chassis to steer the work vehicle 10 or rely on tires/wheels in lieu of the track assemblies 14, 16.

It should also be appreciated that the configuration of the implement 12 described above and shown in FIGS. 1 and 2 is only provided for exemplary purposes. Thus, it should be appreciated that the present subject matter may be readily adaptable to any manner of implement configuration. For example, as indicated above, each frame section of the implement 12 may be configured to support any suitable type of ground-engaging tools, such as by installing closing disks on the aft frame 44 of the implement 12.

Additionally, in accordance with aspects of the present subject matter, the vehicle/implement 10/12 may include one or more imaging devices coupled thereto and/or mounted thereon. As will be described below, each imaging device may be configured to capture image data associated with a portion of the field across which the vehicle/implement 10/12 is traveling. Such image data may, in turn, be indicative of the visual appearance of the field. As such, in several embodiments, the imaging device(s) may be provided in operative association with the vehicle/implement 10/12 such that the associated device(s) has a field of view or detection range directed towards a portion(s) of the field adjacent to the vehicle/implement 10/12. For example, as shown in FIG. 1, in one embodiment, one imaging device 102A may be mounted on a forward end 62 of the work vehicle 10 to capture image data associated with a section of the field disposed in front of the vehicle 10 relative to the direction of travel 34. Similarly, as shown in FIG. 1, a second imaging device 102B may be mounted on an aft end 64 of the implement 12 to capture image data associated with a section of the field disposed behind the implement 12 relative to the direction of travel 14. However, in alternative embodiments, the imaging devices 102A, 102B may be installed at any other suitable location(s) on the vehicle/implement 10/12. Additionally, in some embodiments, the vehicle/implement 10/12 may include only one imaging device or three or more imaging devices.

Furthermore, the vehicle/implement 10/12 may include one or more profile sensors coupled thereto and/or mounted thereon. As will be described below, each profile sensor may be configured to capture profile data associated with a portion of the field across which the vehicle/implement 10/12 is traveling. Such profile data may, in turn, be indicative of the surface profile of the field. As such, in several embodiments, the profile sensor(s) may be provided in operative association with the vehicle/implement 10/12 such that the associated sensor(s) has a field of view or sensor detection range directed towards a portion(s) of the field adjacent to the vehicle/implement 10/12. For example, as shown in FIG. 1, in one embodiment, one profile sensor 104A may be mounted on the forward end 62 of the work vehicle 10 to capture profile data associated with a section of the field disposed in front of the vehicle 10 relative to the direction of travel 14. Similarly, as shown in FIG. 1, a second profile sensor 104B may be mounted on the aft end 64 of the implement 12 to capture profile data associated with a section of the field disposed behind the implement 12 relative to the direction of travel 14. Moreover, in some embodiments, the profile sensors 104A, 104B may be mounted such that the profile sensors 104A, 104B have the same or similar fields of view as the imaging devices 102A, 102B, respectively. As such, the profile data captured by the profile sensors 104A, 104B may be associated with the same sections of the field as the image data captured by the imaging devices 102A, 102B. However, in alternative embodiments, the profile sensors 104A, 104B may be installed at any other suitable location(s) on the vehicle/implement 10/12. Additionally, in some embodiments, the vehicle/implement 10/12 may include only one profile sensor or three or more profile sensors.

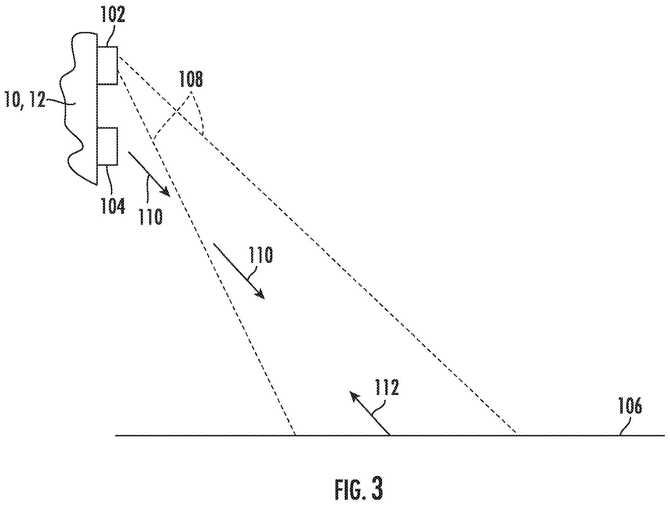

Referring now to FIG. 3, one embodiment of an imaging device 102 and a profile sensor 104 of the vehicle/implement 10/12 is illustrated in accordance with aspects of the present subject matter. In general, the imaging device 102 may correspond to any suitable device(s) configured to capture images or other image-like data of the field indicative of the visual appearance of the field. Specifically, in several embodiments, the imaging device 102 may correspond to a suitable camera(s) configured to capture three-dimensional images of the portion of the field surface 106 present within its field of view (e.g., as indicated by dashed lines 108 in FIG. 3). For instance, in a particular embodiment, the imaging device 102 may correspond to a stereographic camera(s) having two or more lenses with a separate image sensor for each lens to allow the camera(s) to capture stereographic or three-dimensional images. However, in alternative embodiments, the imaging device 102 may correspond to any other suitable sensing device(s) configured to capture image data, such as a two-dimensional or monocular camera.

Moreover, in several embodiments, the profile sensor 104 may correspond to any suitable device(s) configured to capture data indicative of surface profile of the field. Specifically, in several embodiments, the profile sensor 104 may be configured as light detection and ranging (LIDAR) sensor. In such embodiments, as the vehicle/implement 10/12 travel across the field, the profile sensor 104 may be configured to emit one or more light/laser output signals (e.g., as indicated by arrows 110 in FIG. 3) for reflection off the portion of the field surface 106 within the field of view 108 of the imaging device 102. The output signal(s) 110 may, in turn, be reflected by the objects as return signals (e.g., as indicated by arrows 112 in FIG. 3). Moreover, the profile sensor 104 may be configured to receive the reflected return signals 112 and generate a plurality of data points (e.g., a data point scan line or cloud) based on the received return signal(s) 112. Each data point may, in turn, be indicative of the distance between the profile sensor 104 and the portion of the field surface off which the return signals 112 is reflected. As will be described below, a controller may be configured to determine surface profile of the field based on the plurality of data points generated by the profile sensor 104. However, in alternative embodiments, the vision-based sensor 102 may correspond to any other suitable type of sensing device(s) configured to detect the vertical profile of the field surface, such as a radio detection and ranging sensor (RADAR), an ultrasonic sensor, a mechanical sensor or contact-based sensor, and/or the like.

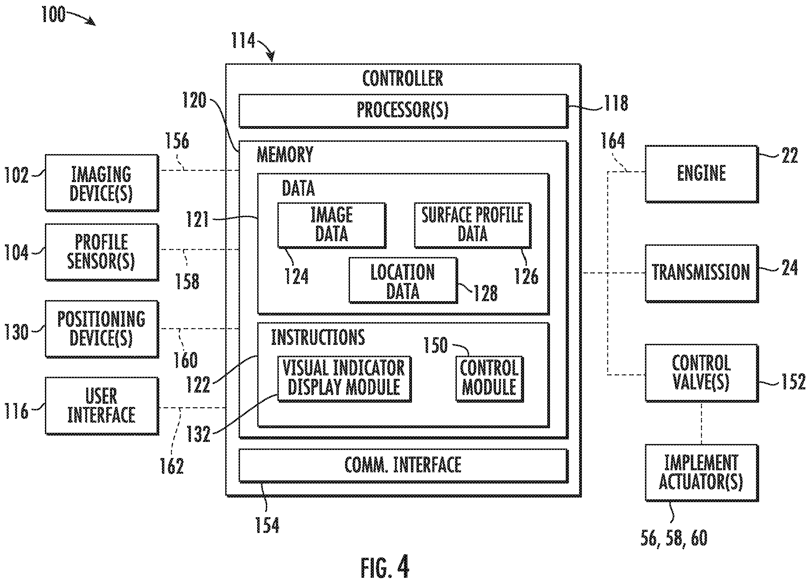

Referring now to FIG. 4, a schematic view of one embodiment of a system 100 for providing a visual indication of field surface profile is illustrated in accordance with aspects of the present subject matter. In general, the system 100 will be described herein with reference to the work vehicle 10 and the agricultural implement 12 described above with reference to FIGS. 1-3. However, it should be appreciated by those of ordinary skill in the art that the disclosed system 100 may generally be utilized with vehicles having any other suitable vehicle configuration and/or implements having any other suitable implement configuration. Additionally, it should be appreciated that, for purposes of illustration, communicative links or electrical couplings of the system 100 shown in FIG. 4 are indicated by dashed lines.

In several embodiments, the system 100 may include a controller 114 and various other components configured to be communicatively coupled to and/or controlled by the controller 114, such as one or more imaging devices 102, one or more profile sensors 104, and/or various components of the work vehicle 10 and/or the implement 12. As will be described in greater detail below, the controller 114 may be configured to receive images or other image data from the imaging device(s) 102 that depict portions of the field as an operation (e.g., a tillage operation) is being performed within the field. Furthermore, the controller 114 may be configured to receive profile data from the profile sensor(s) that is indicative of the surface profile of the imaged portion(s) of the field as the operation is being performed. In this regard, the controller 114 may be configured to analyze the received profile data to estimate or determine the surface profile(s) of the imaged portion(s) of the field. Thereafter, the controller 114 may be configured to control a user interface 116 to display a visual indicator(s) in association with the received image data, with such visual indicator(s) providing a visual reference(s) indicative of the determined surface profile(s) of the imaged portion(s) of the field. For example, in one embodiment, the visual indicator(s) may be superimposed onto the image data. Alternatively, the visual indicator(s) may be displayed adjacent to the image data. The operator may determine from the combination of the displayed image data and visual indicator(s) whether the surface profile of the field is acceptable. In instances when the surface profile is unacceptable, the operator may provide an input to the controller 114 (e.g., via the user interface 116) associated with adjusting one or more operating parameters of the vehicle 10 and/or implement 12.

In several embodiments, the the user interface 116 may be configured to display the image data depicting the field and the visual indicator(s) associated with such data to the operator of the vehicle/implement 10/12. As such, the user interface 116 may include one or more feedback devices (not shown), such as display screens, configured to display the image data and visual indicator(s) to the operator. In addition, some embodiments of the user interface 116 may include one or more input devices (not shown), such as touchscreens, keypads, touchpads, knobs, buttons, sliders, switches, mice, microphones, and/or the like, which are configured to receive user inputs from the operator. In one embodiment, the user interface 116 may be mounted or otherwise positioned within the cab 20 of the vehicle 10. However, in alternative embodiments, the user interface 116 may mounted at any other suitable location.

In general, the controller 114 may correspond to any suitable processor-based device(s), such as a computing device or any combination of computing devices. Thus, as shown in FIG. 4, the controller 114 may generally include one or more processor(s) 118 and associated memory devices 120 configured to perform a variety of computer-implemented functions (e.g., performing the methods, steps, algorithms, calculations, and the like disclosed herein). As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory 120 may generally comprise memory element(s) including, but not limited to, computer readable medium (e.g., random access memory (RAM)), computer readable nonvolatile medium (e.g., a flash memory), a floppy disk, a compact disc-read only memory (CD-ROM), a magneto-optical disk (MOD), a digital versatile disc (DVD) and/or other suitable memory elements. Such memory 120 may generally be configured to store information accessible to the processor(s) 118, including data 121 that can be retrieved, manipulated, created and/or stored by the processor(s) 118 and instructions 122 that can be executed by the processor(s) 118.

In several embodiments, the data 121 may be stored in one or more databases. Specifically, the memory 120 may include an image database 124 for storing images or other image data received from the imaging device(s) 102. For example, the imaging device(s) 102 may be configured to continuously or periodically capture images of adj acent portion(s) of the field as an agricultural operation is being performed on the field. In such an embodiment, the images transmitted to the controller 114 from the imaging device(s) 102 may be stored within the image database 124 for subsequent processing and transmission to the user interface 116. It should be appreciated that, as used herein, the term image data may include any suitable type of data received from the imaging device(s) 102 that depicts the visual appearance of the field, including photographs and other image-related data.

In addition, as shown in FIG. 4, the memory 120 may include a surface profile database 126 for storing information related to the surface profile(s) of the imaged portion(s) of the field. For example, the profile sensor(s) 104 may be configured to continuously or periodically profile data of the imaged portion(s) of the field as the agricultural operation is being performed on the field. In such an embodiment, the profile data transmitted to the controller 114 from the profile sensor(s) 104 may be stored within the image database surface profile database for subsequent processing and/or analysis. It should be appreciated that, as used herein, the term profile data may include any suitable type of data received from the profile sensor(s) 104 that allows for the surface profile of the field to be analyzed, including data point scan lines/LIDAR scan data. Furthermore, as indicated above, based on the profile data received from the profile sensor(s) 104, the controller 114 may be configured to estimate or determine the surface profile(s) of the imaged portions of the field. The surface profile(s) estimated or determined by the controller 114 may then be stored within the surface profile database 126 for subsequent processing and/or analysis.

Moreover, in several embodiments, the memory 120 may also include a location database 128 storing location information about the work vehicle/implement 10, 12 and/or information about the field being processed (e.g., a field map). Specifically, as shown in FIG. 4, the controller 114 may be communicatively coupled to a positioning device(s) 130 installed on or within the work vehicle 10 and/or on or within the implement 12. For example, in one embodiment, the positioning device(s) 130 may be configured to determine the current location of the work vehicle 10 and/or the implement 12 using a satellite navigation position system (e.g. a GPS system, a Galileo positioning system, the Global Navigation satellite system (GLONASS), the BeiDou Satellite Navigation and Positioning system, and/or the like). In such an embodiment, the location determined by the positioning device(s) 130 may be transmitted to the controller 114 (e.g., in the form coordinates) and subsequently stored within the location database 128 for subsequent processing and/or analysis.

Additionally, in several embodiments, the location data stored within the location database 128 may also be correlated to the images stored within the image database 118 and/or the profile data stored within the surface profile database 126. For instance, in one embodiment, the location coordinates derived from the positioning device(s) 130, the images captured by the imaging device(s) 102, and the profile data captured by the profile sensor(s) 104 may each be time-stamped. In such an embodiment, the time-stamped data may allow each image captured by the imaging device(s) 104 and each surface profile measurement (e.g., each captured data point scan line) captured by the profile sensor(s) 104 to be matched or correlated to a corresponding set of location coordinates received from the positioning device(s) 130, thereby allowing the precise location of the portion of the field depicted within a given image as well as the precise location of a given surface profile determination to be known (or at least capable of calculation) by the controller 114.

Moreover, by matching each image and each surface profile measurement to a corresponding set of location coordinates, the controller 114 may also be configured to generate or update a corresponding field map associated with the field being processed. For example, in instances in which the controller 114 already includes a field map stored within its memory 120 that includes location coordinates associated with various points across the field, the surface profile value(s) determined from the profile data captured by the profile sensor(s) 104 may be mapped or correlated to a given location within the field map. Alternatively, based on the location data and the associated profile data, the controller 114 may be configured to generate a field map for the field that includes the geo-located surface profile measurements associated therewith.

Additionally, the controller 114 may also be configured to match or correlate each surface profile determination with the corresponding image of the field. As mentioned above, the profile sensor(s) 104 may capture profile data that is indicative of the portion(s) of the field imaged by the imaging device(s) 106. In this regard, each surface profile determination may correspond to a specific captured image. As such, by matching each image and each surface profile measurement to a corresponding set of location coordinates, the controller 114 may be configured to match or correlate each surface profile determination made to the corresponding captured image. Thereafter, a visual indicator(s) indicative of the determined surface profile(s) may be displayed in association with the corresponding image data on the user interface 116 to the operator.

Referring still to FIG. 4, in several embodiments, the instructions 122 stored within the memory 120 of the controller 114 may be executed by the processor(s) 118 to implement a visual indicator display module 132. More specifically, in several embodiments, the visual indicator display module 132 may be configured to determine surface profile(s) of the imaged portion of the field. As mentioned above, the profile data received from the profile sensor(s) 104 may be indicative of the vertical profile of the soil surface of the field. As such, in several embodiments, the visual indicator display module 132 may be configured to implement one or more data processing techniques to allow the controller 114 to estimate or determine the surface profiles(s) of the imaged portion(s) of the field based on the received profile data. In addition, in one embodiment, the visual indicator display module 132 may be configured to calculate or determine one or more statistical parameters (e.g., the variance, standard deviation, and/or the like) associated with the determined surface profile(s).

Furthermore, the visual indicator display module 132 may be configured to generate one or more visual indicators based on the determined surface profile(s). In general, the visual indicator(s) may provide a visual reference(s) indicative of the determined surface profile(s) of the imaged portion of the field. For example, in one embodiment, the visual indicator(s) may be superimposed onto the image data for display on the user interface 116. Specifically, in such embodiment, the visual indicator display module 132 may be configured to layer the visual indicator(s) onto the image data and transmit the layered data to the user interface 116 for display thereon. Alternatively, the visual indicator(s) may be displayed adjacent to the image data on the user interface 116. Additionally, the statistical parameter(s) may be displayed on the user interface 116 adjacent to the displayed image data and/or visual indicator(s).

It should be appreciated that the visual indicator(s) may correspond to any to any suitable visual display object(s) configured to provide the operator with an indication of the surface profile of the portion of the field depicted in the displayed image data. For example, in one embodiment, the visual indicator(s) may be a line(s) depicting the determined profile(s) of the portion(s) of the field depicted in the displayed image data. That is, the line(s) may have the same shape as the determined surface profile(s). Moreover, such line(s) may be superimposed onto the image data or displayed adjacent to the image data. In another embodiment, the visual indicator(s) may be numbers or values associated with the determined surface profile(s). For instance, such number/values may be the minimum, maximum, and/or average amplitude of the surface profile; the frequency of the surface profile; and period of the surface profile; and/or the like. However, in alternative embodiments, the visual indicator(s) may correspond to any to any suitable visual display object(s), such as a color(s) or symbol(s).

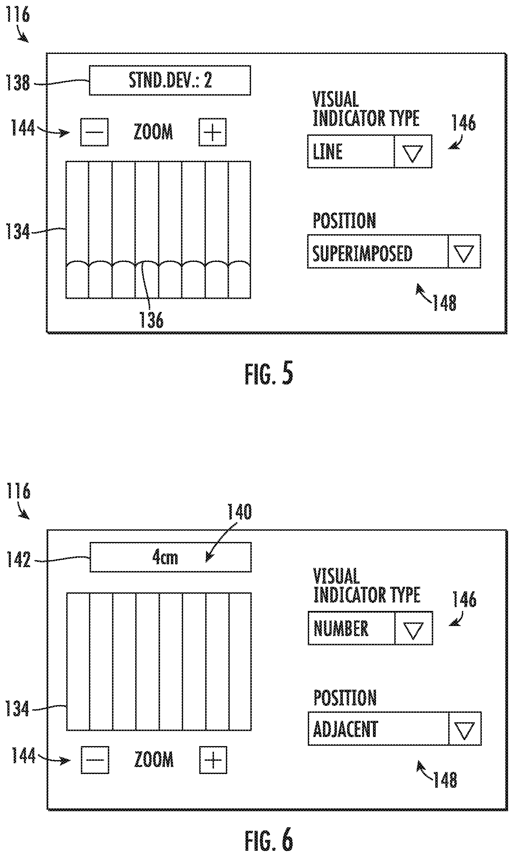

Referring now to FIG. 5, one embodiment of a user interface 116 displaying a visual indicator in association with image data illustrated in accordance with aspects of the present subject matter. Specifically, the user interface 116 may include an image data display portion 134 configured to display the image data transmitted from the controller 114 to the user interface 116. In the illustrated embodiment, the visual indicator corresponds to a line 136 that is indicative of the surface profile of the portion of the field depicted in the image data being displayed. As shown, the line 136 is displayed on the image data display portion 134 such that the line 136 is superimposed onto the displayed image data. Moreover, the user interface 116 may include a statistical parameter display portion 138 for displaying the determined statistical parameter(s).

Referring now to FIG. 6, another embodiment of a user interface 116 displaying a visual indicator in association with image data illustrated in accordance with aspects of the present subject matter. Similar to the embodiment described above, the user interface 116 illustrated in FIG. 6 includes the image data display portion 134 for displaying the image data transmitted from the controller 114 to the user interface 116. However, unlike the embodiment described above, the visual indicator corresponds to a numerical value 140 that is indicative of the amplitude (e.g., the average amplitude) of the surface profile of the portion of the field depicted in the image data being displayed. Furthermore, unlike the embodiment described above, the numerical value 140 is displayed on a visual indicator display portion 142 positioned adjacent to the image data display portion 134.

Additionally, as shown in FIGS. 5 and 6, the user interface 116 may include various interface elements. For example, the user interface 116 may include a zoom setting interface element 144 configured to receive an input from the operator associated with adjusting the zoom setting of the image data being displayed on the image data display portion 134. Moreover, the user interface 116 may include a visual indicator type interface element 146 configured to receive an input from the operator associated with selecting the type of visual indicator (e.g., line, number/value, etc.) being displayed in association with the image data shown in the image data display portion 134. Furthermore, the user interface 116 may include a visual indicator position interface element 148 configured to receive an input from the operator associated with selecting the position of visual indicator (e.g., superimposed onto the image data or adjacent to the image) being displayed in association with the image data. However, in alternative embodiments, the user interface 116 may include any other suitable interface elements, such as interface elements for receiving control action input associated with adjusting an operation parameter(s) of the vehicle 10 and/or implement 12.

Referring again to FIG. 4, the instructions 122 stored within the memory 120 of the controller 114 may also be executed by the processor(s) 118 to implement a control module 150. In general, the control module 150 may be configured to adjust the operation of the work vehicle 10 and/or the implement 12 by controlling one or more components of the vehicle/implement 10, 12. Specifically, in several embodiments, the control module 150 may be configured to adjust one or more operating parameters of the vehicle 10 and/or the implement 12 based on inputs received from the operator inputs. For example, in one embodiment, the operator may determine from the combination of the displayed image data and the visual indicator(s) whether the surface profile of the field is acceptable. In instances when the surface profile is unacceptable, the operator may provide an input to the controller 114 (e.g., via the user interface 116) associated with adjusting one or more operating parameters of the vehicle 10 and/or implement 12. Thereafter, the control module 150 may be configured to fine-tune the operation of the work vehicle 10 and/or the implement 12 in a manner designed to adjust the surface profile of the field based on the received input(s). For instance, when it is determined that the amplitude of the surface profile exceeds a maximum amplitude value (thereby indicating that the surface profile of the field is unacceptable), the control module 150 may be configured to adjust the operation of the work vehicle 10 and/or the implement 12 to adjust the surface profile of the field.

It should be appreciated that the controller 114 may be configured to implement various control actions to adjust the operation of the work vehicle 10 and/or the implement 12 in a manner that adjusts the surface profile of the field. In one embodiment, the controller 114 may be configured to increase or decrease the operational or ground speed of the implement 12 to affect an adjustment in the surface profile of the field. For instance, as shown in FIG. 4, the controller 114 may be communicatively coupled to both the engine 22 and the transmission 24 of the work vehicle 10. In such an embodiment, the controller 114 may be configured to adjust the operation of the engine 22 and/or the transmission 24 in a manner that increases or decreases the ground speed of the work vehicle 10 and, thus, the ground speed of the implement 12, such as by transmitting suitable control signals for controlling an engine or speed governor (not shown) associated with the engine 22 and/or transmitting suitable control signals for controlling the engagement/disengagement of one or more clutches (not shown) provided in operative association with the transmission 24.

In addition to the adjusting the ground speed of the vehicle/implement 10/12 (or as an alternative thereto), the controller 114 may also be configured to adjust one or more operating parameters associated with the ground-engaging tools of the implement 12. For instance, as shown in FIG. 4, the controller 114 may be communicatively coupled to one or more valves 152 configured to regulate the supply of fluid (e.g., hydraulic fluid or air) to one or more corresponding actuators 56, 58, 60 of the implement 12. In such an embodiment, by regulating the supply of fluid to the actuator(s) 56, 58, 60, the controller 114 may automatically adjust the penetration depth of, the force applied to, and/or any other suitable operating parameter associated with the ground-engaging tools of the implement 12. For example, in one embodiment, when it is determined that the amplitude of surface profile of the field has exceeded the maximum amplitude value (thereby indicating that the surface profile of the field is unacceptable), the controller 114 may be configured to control the valve(s) 152 in a manner that increases the force applied to the leveling blades 52 by the actuators 60.

Moreover, as shown in FIG. 4, the controller 114 may also include a communications interface 154 to provide a means for the controller 114 to communicate with any of the various other system components described herein. For instance, one or more communicative links or interfaces 156 (e.g., one or more data buses) may be provided between the communications interface 154 and the imaging device(s) 102 to allow image data transmitted from the imaging device(s) 102 to be received by the controller 114. Similarly, one or more communicative links or interfaces 158 (e.g., one or more data buses) may be provided between the communications interface 154 and the profile sensor(s) 104 to allow profile data transmitted from the profile sensor(s) 104 to be received by the controller 114. Moreover, one or more communicative links or interfaces 160 (e.g., one or more data buses) may be provided between the communications interface 154 and the positioning device(s) 130 to allow the location information generated by the positioning device(s) 130 to be received by the controller 114. Furthermore, one or more communicative links or interfaces 162 (e.g., one or more data buses) may be provided between the communications interface 154 and the user interface 116 to allow the image data and the visual indicator(s) transmitted from the controller 114 to be received by the user interface 116. Such communicative link(s) 162 may also allow operator inputs received by the user interface 116 to be received by the controller 114. In addition, as shown in FIG. 4, one or more communicative links or interfaces 164 (e.g., one or more data buses) may be provided between the communications interface 154 and the engine 22, the transmission 24, the control valves 152, and/or the like to allow the controller 114 to control the operation of such system components.

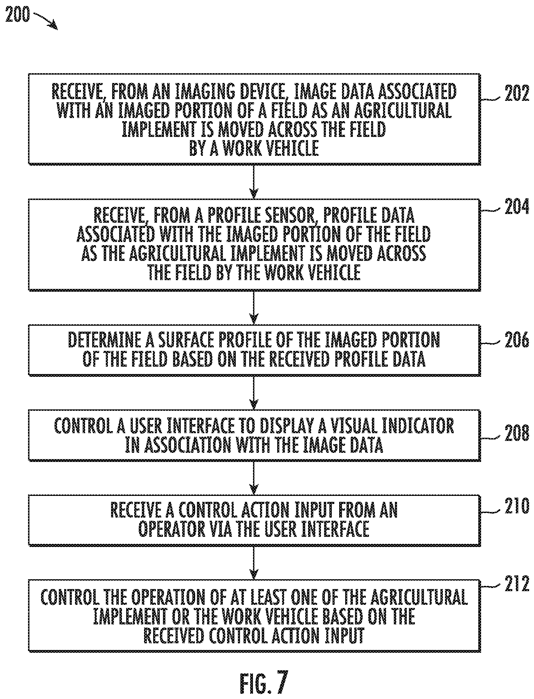

Referring now to FIG. 7, a flow diagram of one embodiment of a method 200 for providing a visual indication of field surface profile is illustrated in accordance with aspects of the present subject matter. In general, the method 200 will be described herein with reference to the work vehicle 10 and the agricultural implement 12 shown in FIGS. 1-3, as well as the various system components shown in FIGS. 4-6. However, it should be appreciated that the disclosed method 200 may be implemented with work vehicles having any other suitable vehicle configuration, implements having any other suitable implement configuration, and/or within systems having any other suitable system configuration. In addition, although FIG. 7 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown in FIG. 7, at (202), the method 200 may include receiving, from an imaging device, image data associated with an imaged portion of a field as an agricultural implement is moved across the field by a work vehicle. As described above, the vehicle/implement 10/12 may include one or more imaging device(s) 102 (e.g., a camera(s)), with each imaging device 102 configured to capture image data of a portion of the field within its field of view 108. In this regard, as the vehicle/implement 10/12 travels across the field to perform an agricultural operation thereon (e.g., a tillage operation), the controller 114 may be configured to receive the captured image data from the imaging device(s) 102 (e.g., via the communicative link 156). As will be described below, the controller 114 may be configured to control the user interface 116 to display the image data thereon.

In some embodiments, the image data obtained at (202) may include a single image frame. Thus, in some embodiments, the method 200 may be performed iteratively for each new image frame as such image frame is received. For example, method 200 may be performed iteratively in real-time as new images are received from the imaging device(s) 102, while the imaging device(s) 102 are moved throughout the field (e.g., as a result of being installed on the vehicle 10 or the implement 12).

In other embodiments, the image data obtained at (202) may include a plurality of image frames. In such embodiments, the plurality of image frames may be concatenated or otherwise combined and processed as a single batch (e.g., by way of a single performance of method 200 over the batch). For example, in one embodiment, image frames from several imaging devices 102 may be concatenated to form a single image frame depicting a portion of the field aft of the implement 10 and extending the entire width of the implement 10 along a lateral direction.

Furthermore, at (204), the method 200 may include receiving, from a profile sensor, profile data associated with the imaged portion of the field as the agricultural implement is moved across the field by the work vehicle. As described above, the vehicle/implement 10/12 may include one or more profile sensor(s) 104 (e.g., a LIDAR sensor(s)), with each profile sensor 104 configured to capture profile data indicative of the surface profile of the portion of the field within the field of view 108 of one of the imaging devices 102. In this regard, as the vehicle/implement 10/12 travels across the field to perform the agricultural operation thereon (e.g., a tillage operation), the controller 114 may be configured to receive the captured profile data from the profile sensor(s) 104 (e.g., via the communicative link 158). As will be described below, the controller 114 may be configured to analyze the received profile data to determine the surface profile of the imaged portion(s) of the field.

In some embodiments, the profile data received at (204) may be a plurality of single data point scan lines (e.g., the vertical profile of a 2-D swath of the field associated with the scan line). Thus, in some embodiments, the method 200 may be performed iteratively for each new data scan line as such scan line is received. For example, method 200 may be performed iteratively in real-time as new data scan lines are received from the profile sensor(s) 104, while the profile sensor(s) 104 is moved throughout the field (e.g., as a result of being installed on the vehicle 10 or the implement 12). Alternatively, the vision data received at (202) may include a data point cloud associated with a 3-D portion of the field (e.g., from a profile sensor 104 capable of scanning a 3-D portion of the field).

Additionally, as shown in FIG. 7, at (206), the method 200 may include determining a surface profile of the imaged portion of the field based on the received profile data. For example, as indicated above, the visual indicator display module 132 of the controller 114 may be configured to implement one or more data analysis techniques that allow the controller 114 to determine the surface profile(s) of the imaged portion(s) of the field based on the received profile data. Moreover, in one embodiment, the visual indicator display module 132 of the controller 114 may be configured to implement one or more statistical analysis techniques that allow the controller 114 to determine one or more statistical parameter associated with the determined surface profile(s).

Furthermore, at (208), the method 200 may include controlling a user interface to display a visual indicator in association with the image data. For example, as described above, the visual indicator display module 132 of the controller 114 may, in accordance with aspects of the present subject matter, be configured to determine one or more visual indicators based on the determined surface profile(s) and control the user interface 116 to display the visual indicator(s) in association with the image data. Moreover, in several embodiments, at (208), the controller 114 may be configured to receive one or more inputs from the operator (e.g., via the interface elements 144, 146, 148) associated with adjusting the type, size, and/or position of the visual indicator(s).

In addition, as shown in FIG. 7, at (210), the method 200 may include receiving a control action input from an operator via the user interface. For example, as indicated above, the user interface 116 may be configured to receive one or more inputs from the operator of the vehicle/implement 10/12 associated with adjusting the operation of the vehicle 10 and/or the implement 12 in a manner that adjusts the surface profile of the field.

Furthermore, at (212), the method may include controlling the operation of at least one of the agricultural implement or the work vehicle based on the received control action input. For example, as indicated above, in several embodiments, the control module 150 of the controller 114 may be configured to adjust one or more operating parameters of the vehicle 10 and/or the implement 12, such as ground speed of the vehicle/implement 10/12 and or the force(s) applied to the ground-engaging tool(s) (e.g., the leveling blades 52) of the implement 12, in a manner that adjusts the surface profile or soil profile of the field.

It is to be understood that the steps of the method 200 are performed by the controller 114 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by the controller 114 described herein, such as the method 200, is implemented in software code or instructions which are tangibly stored on a tangible computer readable medium. The controller 114 loads the software code or instructions via a direct interface with the computer readable medium or via a wired and/or wireless network. Upon loading and executing such software code or instructions by the controller 114, the controller 114 may perform any of the functionality of the controller 114 described herein, including any steps of the method 200 described herein.

The term "software code" or "code" used herein refers to any instructions or set of instructions that influence the operation of a computer or controller. They may exist in a computer-executable form, such as machine code, which is the set of instructions and data directly executed by a computer's central processing unit or by a controller, a human-understandable form, such as source code, which may be compiled in order to be executed by a computer's central processing unit or by a controller, or an intermediate form, such as object code, which is produced by a compiler. As used herein, the term "software code" or "code" also includes any human-understandable computer instructions or set of instructions, e.g., a script, that may be executed on the fly with the aid of an interpreter executed by a computer's central processing unit or by a controller.

This written description uses examples to disclose the technology, including the best mode, and also to enable any person skilled in the art to practice the technology, including making and using any devices or systems and performing any incorporated methods. The patentable scope of the technology is defined by the claims, and may include other examples that occur to those skilled in the art.

## Claims

1. A system (100) for providing a visual indication of field surface profile as an agricultural implement (12) is moved across a field by a work vehicle (10), the system (100) comprising a user interface (116) and an imaging device (102) provided in operative association with one of the work vehicle (10) or the agricultural implement (12) such that the imaging device (102) has a field of view directed to a portion of the field, the system (100) further comprising a profile sensor (104) provided in operative association with one of the work vehicle (10) or the implement (12) such that the profile sensor (104) is configured to capture profile data indicative of a surface profile of the portion of the field present within the field of view of the imaging device (102); the system (100) further comprising a controller (114) communicatively coupled to the user interface (116), the imaging device (102), and the profile sensor (104), the controller (114) configured to: receive, from the imaging device (102), image data associated with an imaged portion of the field and determine the surface profile of the imaged portion of the field based on the profile data, the system (100) **characterized by** the controller (114) being further configured to:
control the user interface (116) to display a visual indicator (136, 140) in association with the image data, the visual indicator (136, 140) providing a visual reference indicative of the determined surface profile of the imaged portion of the field.

2. The system (100) as in claim 1, wherein the visual indicator (136, 140) is superimposed over the image data being displayed on the user interface (116).

3. The system (100) as in any preceding claim, wherein the controller (114) is further configured to:
layer the visual indicator (136, 140) onto the received image data to form layered image data; and
transmit the layered image data to the user interface (116).

4. The system (100) as in any preceding claim, wherein the visual indicator (136, 140) is displayed adjacent to the image data being displayed on the user interface (116).

5. The system (100) as in any preceding claim, wherein the visual indicator (136, 140) comprises at least one of a line (136) or a number (140).

6. The system (100) as in any preceding claim, further comprising:
a positioning device (130) provided in operative association with one of the agricultural implement (12) or the work vehicle (10), the controller (114) further configured to correlate the visual indicator (136, 140) to the received image data based on location data received from the positioning device (130).

7. The system (100) as in any preceding claim, wherein the controller (114) is further configured to receive an input associated with adjusting at least one of a type or a position of the visual indicator (136, 140).

8. The system (100) as in any preceding claim, wherein the controller (114) is further configured to:
determine a statistical parameter associated with the surface profile based on the profile data; and
control the user interface (116) to display the determined statistical parameter.

9. The system (100) as in any preceding claim, wherein the controller (114) is further configured to:
receive a control action input from an operator via the user interface (116); and
control an operation of at least one of the agricultural implement (12) or the work vehicle (10) based on the received control action input.

10. The system (100) as in any preceding claim, wherein the imaging device (102) comprises a camera and the profile sensor (104) comprises a LIDAR sensor.

11. The system (100) as in any preceding claim, wherein the imaging device (102) is positioned at an aft end (64) of the agricultural implement (12) such that the field of view is directed to a portion of the field located aft of the agricultural implement (12).

12. A method (200) for providing a visual indication of field surface profile as an agricultural implement (12) is moved across a field by a work vehicle (10), the method (200) comprising receiving, with one or more computing devices, image data associated with an imaged portion of the field and receiving, with the one or more computing devices, profile data indicative of a surface profile of the imaged portion of the field, the method (200) further comprising determining, with the one or more computing devices, the surface profile of the imaged portion of the field based on the received profile data, the method (200) **characterized by**:
controlling, with the one or more computing devices, a user interface (116) to display a visual indicator (136, 140) in association with the image data, the visual indicator (136, 140) providing a visual reference indicative of the determined surface profile of the imaged portion of the field.

13. The method (200) as in claim 12, wherein the visual indicator (136, 140) is superimposed over the image data being displayed on the user interface (116).

14. The method (200) as in any of claims 12 or 13, further comprising:
layering, with the one or more computing devices, the visual indicator (136, 140) onto the received image data to form layered image data; and
transmitting, with the one or more computing devices, the layered image data to the user interface (116).

15. The method (200) as in any of claims 12 or 14, wherein the visual indicator (136, 140) is displayed adjacent to the image data being displayed on the user interface (116).

## Patentansprüche

1. System (100) zum Bereitstellen eines visuellen Indikators eines Feldoberflächenprofils, während ein landwirtschaftliches Arbeitsgerät (12) von einem Arbeitsfahrzeug (10) über ein Feld bewegt wird, wobei das System (100) eine Nutzerschnittstelle (116) und eine Bildgebungseinrichtung (102) aufweist, die in wirkender Verbindung mit einem aus Arbeitsfahrzeug (10) oder landwirtschaftlichem Arbeitsgerät (12) steht, so dass die Bildgebungseinrichtung (102) ein Sichtfeld aufweist, das auf einen Abschnitt des Felds gerichtet ist, wobei das System (100) des Weiteren einen Profilsensor (104) aufweist, der in wirkender Verbindung mit einem aus Arbeitsfahrzeug (10) oder Arbeitsgerät (12) vorgesehen ist, so dass der Profilsensor (104) dazu eingerichtet ist, Profildaten zu erfassen, die kennzeichnend für ein Oberflächenprofil des Abschnitts des innerhalb des Sichtfelds der Bildgebungseinrichtung (102) vorhandenen Felds sind; wobei das System (100) des Weiteren eine Steuereinheit (114) aufweist, die kommunikativ mit der Nutzerschnittstelle (116), der Bildgebungseinrichtung (102) und dem Profilsensor (104) gekoppelt ist, wobei die Steuereinheit (114) eingerichtet ist zum: Empfangen von Bilddaten von der Bildgebungseinrichtung (102), die zugehörig zu einem abgebildeten Abschnitt des Felds sind, und Bestimmen des Oberflächenprofils des abgebildeten Abschnitts des Felds basierend auf den Profildaten, wobei das System (100) **dadurch gekennzeichnet ist, dass** die Steuereinheit (114) des Weiteren eingerichtet ist zum:
Steuern der Nutzerschnittstelle (116) zum Anzeigen eines visuellen Indikators (136, 140), der zugehörig zu den Bilddaten ist, wobei der visuelle Indikator (136, 140) eine visuelle Referenz vorsieht, die kennzeichnend für das bestimmte Oberflächenprofil des abgebildeten Abschnitts des Felds ist.

2. System (100) nach Anspruch 1, wobei der visuelle Indikator (136, 140) über den auf der Nutzerschnittstelle (116) angezeigten Bilddaten eingeblendet wird.

3. System (100) nach einem der vorhergehenden Ansprüche, wobei die Steuereinheit (114) des Weiteren eingerichtet ist zum:
Überlagern der empfangenen Bilddaten mit dem visuellen Indikator (136, 140), um überlagerte Bilddaten auszubilden; und
Senden der überlagerten Bilddaten an die Nutzerschnittstelle (116).

4. System (100) nach einem der vorhergehenden Ansprüche, wobei der visuelle Indikator (136, 140) angrenzend zu den auf der Nutzerschnittstelle (116) angezeigten Bilddaten angezeigt wird.

5. System (100) nach einem der vorhergehenden Ansprüche, wobei der visuelle Indikator (136, 140) mindestens ein Element aus einer Linie (136) oder einer Zahl (140) aufweist.

6. System (100) nach einem der vorhergehenden Ansprüche, das des Weiteren aufweist:
ein Ortungsgerät (130), das in wirkender Verbindung mit einem aus landwirtschaftlichem Arbeitsgerät (12) oder Arbeitsfahrzeug (10) vorgesehen ist, wobei die Steuereinheit (114) des Weiteren dazu eingerichtet ist, den visuellen Indikator (136, 140) zu den empfangenen Bilddaten basierend auf den von dem Ortungsgerät (130) empfangenen Standortdaten zu korrelieren.

7. System (100) nach einem der vorhergehenden Ansprüche, wobei die Steuereinheit (114) des Weiteren dazu eingerichtet ist, eine Eingabe, die zugehörig zu einem Verändern von mindestens einem aus einem Typ oder einer Position des visuellen Indikators (136, 140) ist, zu empfangen.

8. System (100) nach einem der vorhergehenden Ansprüche, wobei die Steuereinheit (114) des Weiteren eingerichtet ist zum:
Bestimmen eines statistischen Parameters, der zugehörig zu einem Oberflächenprofil ist, auf Basis der Profildaten; und
Steuern der Nutzerschnittstelle (116) zum Anzeigen des bestimmten, statistischen Parameters.

9. System (100) nach einem der vorhergehenden Ansprüche, wobei die Steuereinheit (114) des Weiteren eingerichtet ist zum:
Empfangenen einer Steuerbefehlseingabe von einer Bedienperson über die Nutzerschnittstelle (116); und
Steuern eines Betriebs von mindestens einem aus dem landwirtschaftlichen Arbeitsgerät (12) oder dem Arbeitsfahrzeug (10) basierend auf der empfangenen Steuerbefehlseingabe.

10. System (100) nach einem der vorhergehenden Ansprüche, wobei die Bildgebungseinrichtung (102) eine Kamera aufweist und der Profilsensor (104) einen LIDAR-Sensor aufweist.

11. System (100) nach einem der vorhergehenden Ansprüche, wobei die Bildgebungseinrichtung (102) an einem nach hinten gerichteten Ende (64) des landwirtschaftlichen Arbeitsgeräts (12) angeordnet ist, so dass das Sichtfeld auf einen Abschnitt des Felds gerichtet ist, der von dem landwirtschaftlichen Arbeitsgerät (12) aus nach hinten gerichtet ist.

12. Verfahren (200) zum Bereitstellen eines visuellen Indikators eines Feldoberflächenprofils, während ein landwirtschaftliches Arbeitsgerät (12) von einem Arbeitsfahrzeug (10) über ein Feld bewegt wird, wobei das Verfahren (200) umfasst, mit einer oder mehreren Verarbeitungseinrichtungen Bilddaten, die zugehörig zu einem abgebildeten Abschnitt des Felds sind, zu empfangen, und mit der einen oder den mehreren Verarbeitungseinrichtungen Profildaten, die kennzeichnend für ein Oberflächenprofil des abgebildeten Abschnitts des Felds sind, zu empfangen, wobei das Verfahren (200) des Weiteren umfasst, mit der einen oder den mehreren Verarbeitungseinrichtungen das Oberflächenprofil des abgebildeten Abschnitts des Felds basierend auf den empfangenen Profildaten zu bestimmen, wobei das Verfahren (200) **gekennzeichnet ist durch**:
Steuern, mit der einen oder den mehreren Verarbeitungseinrichtungen, einer Nutzerschnittstelle (116) zum Anzeigen eines visuellen Indikators (136, 140), der zugehörig zu den Bilddaten ist, wobei der visuelle Indikator (136, 140) eine visuelle Referenz vorsieht, die kennzeichnend für das bestimmte Oberflächenprofil des abgebildeten Abschnitts des Felds ist.

13. Verfahren (200) nach Anspruch 12, wobei der visuelle Indikator (136, 140) über den auf der Nutzerschnittstelle (116) angezeigten Bilddaten eingeblendet wird.

14. Verfahren (200) nach einem der Ansprüche 12 oder 13, das des Weiteren aufweist:
Überlagern, mit der einen oder den mehreren Verarbeitungseinrichtungen, der empfangenen Bilddaten mit dem visuellen Indikator (136, 140), um überlagerte Bilddaten auszubilden; und
Senden, mit der einen oder den mehreren Verarbeitungseinrichtungen, der überlagerten Bilddaten an die Nutzerschnittstelle (116).

15. Verfahren (200) nach einem der Ansprüche 12 oder 14, wobei der visuelle Indikator (136, 140) angrenzend zu den auf der Nutzerschnittstelle (116) angezeigten Bilddaten angezeigt wird.

## Revendications

1. Système (100) permettant de fournir une indication visuelle du profil de surface du champ au fur et à mesure qu'un outil agricole (12) est déplacé à travers un champ par un véhicule de travail (10), le système (100) comprenant une interface utilisateur (116) et un dispositif d'imagerie (102) fourni en association opérationnelle avec l'un parmi le véhicule de travail (10) ou l'outil agricole (12) de sorte que le dispositif d'imagerie (102) ait un champ de vision dirigé vers une partie du champ, le système (100) comprenant en outre un capteur de profil (104) fourni en association opérationnelle avec l'un parmi le véhicule de travail (10) ou l'outil (12) de sorte que le capteur de profil (104) soit configuré pour capturer des données de profil indiquant un profil de surface de la partie du champ présente dans le champ de vision du dispositif d'imagerie (102) ; le système (100) comprenant en outre un dispositif de commande (114) couplé en communication à l'interface utilisateur (116), le dispositif d'imagerie (102) et le capteur de profil (104), le dispositif de commande (114) étant configuré pour : recevoir, à partir du dispositif d'imagerie (102), les données d'image associées à une partie imagée du champ et déterminer le profil de surface de la partie imagée du champ en fonction des données de profil, le système (100) **caractérisé par** le dispositif de commande (114) étant également configuré pour :
commander l'interface utilisateur (116) pour afficher un indicateur visuel (136, 140) associé aux données d'image, l'indicateur visuel (136, 140) fournissant une référence visuelle indiquant le profil de surface déterminé de la partie imagée du champ.

2. Système (100) selon la revendication 1, dans lequel l'indicateur visuel (136, 140) est superposé aux données d'image affichées sur l'interface utilisateur (116).

3. Système (100) selon l'une quelconque des revendications précédentes, dans lequel le dispositif de commande (114) est configuré pour :
superposer l'indicateur visuel (136, 140) sur les données d'image reçues afin de constituer des données d'image superposées ; et
transmettre les données d'image superposées à l'interface de l'utilisateur (116).

4. Système (100) selon l'une quelconque des revendications précédentes, dans lequel l'indicateur visuel (136, 140) est affiché à côté des données d'image affichées sur l'interface utilisateur (116).

5. Système (100) selon l'une quelconque des revendications précédentes, dans lequel l'indicateur visuel (136, 140) comprend au moins un parmi une ligne (136) ou un nombre (140).

6. Système (100) selon l'une quelconque des revendications précédentes, comprenant en outre :
un dispositif de positionnement (130) fourni en association opérationnelle avec l'un parmi l'outil agricole (12) ou le véhicule de travail (10), le dispositif de commande (114) étant également configuré pour corréler l'indicateur visuel (136, 140) avec les données d'image reçues en fonction des données d'emplacement reçues du dispositif de positionnement (130).

7. Système (100) selon l'une quelconque des revendications précédentes, dans lequel le dispositif de commande (114) est en outre configuré pour recevoir une entrée associée au réglage d'au moins un parmi un type ou une position de l'indicateur visuel (136, 140).

8. Système (100) selon l'une quelconque des revendications précédentes, dans lequel le dispositif de commande (114) est configuré pour :
déterminer un paramètre statistique associé au profil de surface en fonction des données du profil ; et
commander l'interface utilisateur (116) afin d'afficher le paramètre statistique déterminé.

9. Système (100) selon l'une quelconque des revendications précédentes, dans lequel le dispositif de commande (114) est configuré pour :
recevoir une entrée d'action de commande d'un opérateur via l'interface utilisateur (116) ; et
commander le fonctionnement d'au moins un parmi l'outil agricole (12) ou le véhicule de travail (10) en fonction de l'entrée d'action de commande reçue.

10. Système (100) selon l'une quelconque des revendications précédentes, dans lequel le dispositif d'imagerie (102) comprend une caméra et le capteur de profil (104) comprend un capteur LIDAR.

11. Système (100) selon l'une quelconque des revendications précédentes, dans lequel le dispositif d'imagerie (102) est positionné à l'extrémité arrière (64) de l'outil agricole (12) de manière à ce que le champ de vision soit dirigé vers une partie du champ située à l'arrière de l'outil agricole (12).

12. Procédé (200) permettant de fournir une indication visuelle du profil de surface du champ au fur et à mesure qu'un outil agricole (12) est déplacé à travers un champ par un véhicule de travail (10), le procédé (200) comprenant la réception, avec un ou plusieurs dispositifs informatiques, des données d'image associées à une partie imagée du champ et la réception, avec un ou plusieurs dispositifs informatiques, de données de profil indicatives d'un profil de surface de la partie imagée du champ, le procédé (200) consistant en outre à déterminer, avec un ou plusieurs dispositifs informatiques, le profil de surface de la partie imagée du champ en fonction des données de profil reçues, le procédé (200) étant **caractérisé par** :
la commande, avec un ou plusieurs dispositifs informatiques, d'une interface utilisateur (116) permettant d'afficher un indicateur visuel (136, 140) en association avec les données d'image, l'indicateur visuel (136, 140) fournissant une référence visuelle indiquant le profil de surface déterminé de la partie imagée du champ.

13. Procédé (200) selon la revendication 12, dans laquelle l'indicateur visuel (136, 140) est superposé aux données d'image affichées sur l'interface utilisateur (116).

14. Procédé (200) selon l'une quelconque des revendications 12 ou 13, comprenant en outre :
la superposition, avec un ou plusieurs appareils informatiques, de l'indicateur visuel (136, 140) sur les données d'image reçues afin de constituer des données d'image superposées ; et
la transmission, avec un ou plusieurs périphériques informatiques, des données d'image superposées vers l'interface utilisateur (116).

15. Procédé (200) selon l'une quelconque des revendications 12 ou 14, dans laquelle l'indicateur visuel (136, 140) est affiché à côté des données d'image affichées sur l'interface utilisateur (116).
